# EUROPEAN PATENT SPECIFICATION

(11) **EP 1 235 987 B1**
(45) Date of publication and mention of the grant of the patent: **22.04.2009**
(21) Application number: 00989081.5
(22) Date of filing: 07.12.2000
(51) Int. Cl.: F16B 19/10, F16B 19/08, F16B 5/04, F16B 5/02

(54) **FASTENING ASSEMBLY AND METHOD FOR FASTENING A COMPOSITE LAMINATE TOGETHER**
BEFESTIGUNGSVORRICHTUNG UND VERFAHREN ZUM BEFESTIGEN EINES VERBUNDLAMINATS
SYSTEME DE FIXATION ET PROCEDE DE FIXATION D'UN LAMINE COMPOSITE

(30) Priority: 10.12.1999 US 458871
(43) Date of publication of application: 04.09.2002
(73) Proprietor: Novator AB, 113 47 Stockholm (SE)
(72) Inventor: ERIKSSON, Ingvar, S-112 26 Stockholm (SE)
(74) Representative: Winblad, Hans Peter
(86) International application number: PCT/SE2000/002455
(87) International publication number: WO 2001/042668

(56) References cited:
- FR-A- 885 832
- GB-A- 767 675
- US-A- 2 774 098
- US-A- 5 651 172

## Description

### BACKGROUND OF THE INVENTION

### 1. Field of the invention.

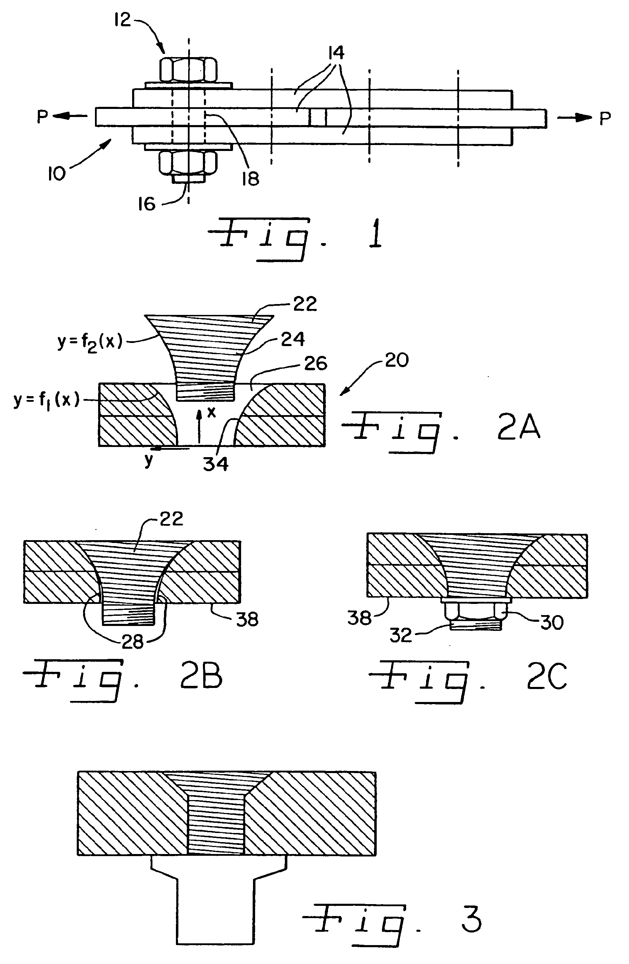

The present invention relates to walk known fastening devices like the one shown in fig. 1, and, more particularly, to fastening devices for fastening a composite laminate together.

### 2. Description of the related art.

Mechanical properties of graphite composites make them attractive for structural applications, such as in aircraft and spacecraft, where high strength and stiffness-to-weight ratios are required. In structural applications, composite components are often fastened to other structural components (composites or metals) by mechanical means. In bolted composite structures, stress concentrations develop around the holes, severely reducing the strength of the structure. The regions containing holes must, therefore, be reinforced, resulting in an overall weight increase. Overdesigned joints can easily reduce the weight savings which are possible through the use of composite materials. In order to realize the full potential of laminated composite materials as structural elements, the strength and failure characteristics of mechanically fastened joints must, therefore, be optimized.

The strength and fatigue life of bolted joints in composite (and metal) structures are affected by a large number of factors. In particular, factors such as type of fastener, fastener/hole tolerance and lateral constraint affect the strength and fatigue life. In critical joints in thick composite structures, the non-uniform contact stress distribution through the thickness reduces the static strength and fatigue life of the structure significantly: For aerodynamical reasons countersunk fasteners are often required. The countersink reduces the static strength and fatigue life of bolted joints as compared with joints that have protruding head fasteners. The reason is due to several factors such as an unevenly distributed contact stress and low clamping force.

It is known for fasteners and fastener holes in aircraft structures to be cylindrical or cylindrical in combination with a conical countersink. Previously, it has been difficult in a production environment to machine a hole in an aircraft structure such that the hole has a complex geometry, i.e., such that an inner surface of the hole is curved or parabolic along its length. Because of this machining difficulty, complex fastener and hole geometries have not been previously used.

A bolted structure 10 (Fig. 1) is fastened by a known fastener 12 which may be protruding or countersunk. Fastener 12 is used to join plates 14 and transfer the load from one member to the other by shear forces in bolt 16. As the joint is loaded, bolt 16 bends and tilts in hole 18 causing a stress concentration through the thickness, which may significantly reduce the strength of the laminate. For optimum fatigue performance it is important to have an interference fit between fastener 12 and hole 18. A special problem when using interference fit fasteners in laminated composite materials is the risk for damaging the laminate when installing the fastener in the hole.

A severe disadvantage of existing aerospace fastener systems is the need for nuts or collars at the exit side of the hole or anchorage of the fastener. Fig. 3 shows a Hucktite type of lock bolt installed in a composite laminate. The parts of the fastener used for anchorage (shank and collar) represent a significant amount of the weight of the fastener. Moreover, the need for collars makes installation of blind rivets difficult in composite materials since the collar may cause damage to the composite material in the installation process. This is a well-known problem in the aircraft industry.

What is needed in the art is a fastening device and technique which reduces the non-uniform stress concentration through the thickness of a laminate to be fastened, and which makes it possible to install the fastening device with a well defined interference fit in both composites and metals without risking to damage the material.

### SUMMARY OF THE INVENTION

The present invention provides a fastening device that increases the static strength and fatigue life of composite (and metal) structures, saves weight and facilitates automatic fastener installation, thereby increasing productivity, see claim 1.

An advantage of the present invention is that a well defined interference fit is provided between the fastener device and the throughhole in the laminate.

Another advantage is that the stress concentration through the thickness of the laminate is minimized.

Yet another advantage is that the weight of the fastener assembly is less than that of known fasteners.

A further advantage is that the fastener can be easily installed in the throughhole of the laminate using an automated assembly process.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
Fig. 1 is a side view of plates fastened together by a known fastener;
Figs. 2(a)-(c) illustrate the steps of installing one embodiment of a fastener assembly in a throughhole of a laminate;
Fig. 3 is a side, partially sectional view of another known fastener;
Figs. 4(a)-(d) illustrate the steps of installing another embodiment of a fastener assembly in a throughhole of a laminate;
Figs. 5(a)-(d) illustrate the steps of installing a fastener assembly of the present invention in a throughhole of a laminate; and
Fig. 6 is a top view of the fastener assembly of Figs. 5(a)-(d).

Corresponding reference characters indicate corresponding parts throughout the several views. The exemplifications set out herein illustrate one preferred embodiment of the invention, in one form, and such exemplifications are not to be construed as limiting the scope of the invention in any manner.

### DETAILED DESCRIPTION OF THE INVENTION

It is now possible, using automated high speed machining techniques, to cost effectively machine high precision straight diameter and conical countersinks. Such techniques allow the machining of complex fastener hole geometries without increasing tool cost or machining time. Hence, it is now possible to implement such machine tools in production environments. Such techniques can be used for machining holes in critical structures, thereby providing significant advantages with regard to strength, fatigue life, weight savings, and productivity.

A multi-layered laminate such as a composite laminate 20 (Fig. 2a) is fastened by a fastener 22 with a complex shaped shank 24. The shank geometry is defined by the function y = f₂(x). Fastener 22 is installed into a hole 26 with a complex shaped hole edge geometry defined by the function y = f₁(x), wherein the second derivative of y is positive for any value of x. That is, the diameter of hole 26 increases at an increasing rate in direction x. Fastener 22 is tightened to secure a well defined interference fit and a desirable pre-stress distribution in the material. The geometries of fastener 22 and of hole 26 increase the strength and fatigue life of the joint as compared to known fasteners. Fig. 2b shows the untightened fastener 22 installed in hole 26. A certain prescribed clearance 28, which is of exaggerated size in Fig. 2b for purposes of illustration, exists between fastener 22 and an inner surface 34 of hole 26. When fastener 22 is tightened by coupling an internally threaded collar 30 with threads 32 on shank 24, an interference fit is provided between fastener 22 and hole 26. Thus, the shapes of shank 24 and of inner surface 34 of hole 26 are optimized such that stress concentration through the thickness of fastener 22 is reduced or eliminated. A well defined interference fit between fastener 22 and hole 26 is provided by tightening collar 30 such that collar 30 exerts a force on an outer surface 38 of laminate 20, thereby biasing fastener 22 in hole 26. Strength and fatigue life of a typical joint can be substantially improved by using the suggested approach.

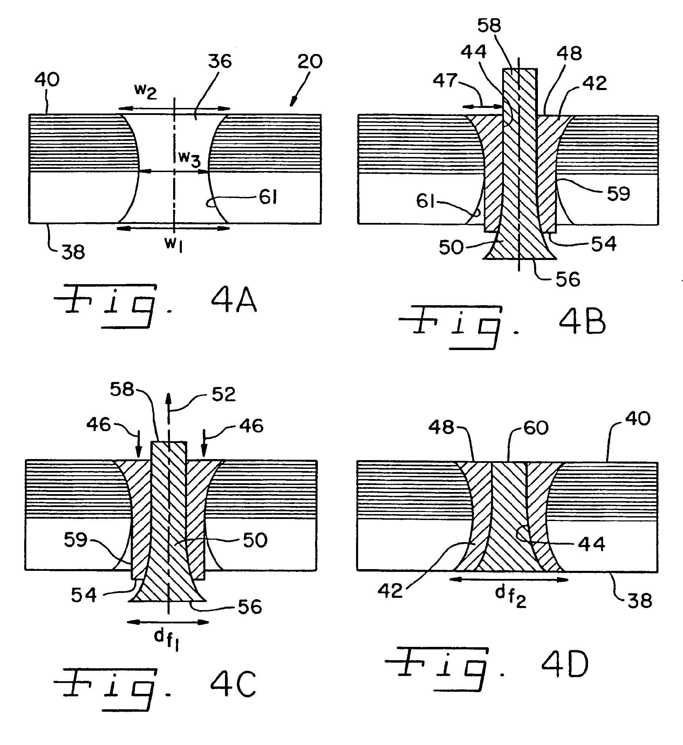

Orbital hole machining makes it possible to machine complex shaped holes such as the convexly shaped hole 36 shown in Fig. 4a. A width w₃ near a mid-point of hole 36 is substantially less than widths w₁ and w₂ of hole 36 at respective outer surfaces 38 and 40 of composite laminate 20. An annular blind fastener 42 (Fig. 4b) having a through channel 44 is installed in hole 36 by pushing fastener 42 in the direction indicated by arrows 46 (Fig. 4c) until fastener 42 is entirely disposed to one side of outer surface 40 of laminate 20. As is evident from the drawings, a wall thickness 47 of fastener 42 is at a maximum at outer surface 40 and tapers down in accordance with the decreasing width of hole 36. Thus, fastener 42 can be inserted into hole 36 until an axial surface 48 of fastener 42 is substantially flush or coplanar with outer surface 40, but fastener 42 cannot be pushed entirely through throughhole 36.

An elongate expanding rod 50 is pulled through through channel 44 in the direction indicated by arrow 52. As best seen in a comparison of Figs. 4c and 4d, due to the plasticity or flexibility of fastener 42, a width or diameter of an opposite axial surface 54 of fastener 42 increases from d₁ to d₁₂ as expanding rod 50 is pulled into through channel 44. Similarly to the insertion of fastener 42 into through hole 36, expanding rod 50 can be inserted into through channel 44 until an axial surface 56 of expanding rod 50 is substantially flush or coplanar with both axial surface 54 of fastener 42 and outer surface 38. A width or diameter of expanding rod 50 is at a maximum at outer surface 38 and tapers down such that expanding rod 50 cannot be pushed entirely through channel 44. Expanding rod 50 is tightly received within through channel 44 and biases a peripheral surface 59 of fastener 42 against inner surface 61 of throughhole 36. As a final step, an end 58 of expanding rod 50 is cut or otherwise machined off such that a resulting machined surface 60 of expanding rod 50 is substantially flush or coplanar with each of axial surface 48 of fastener 42 and outer surface 40.

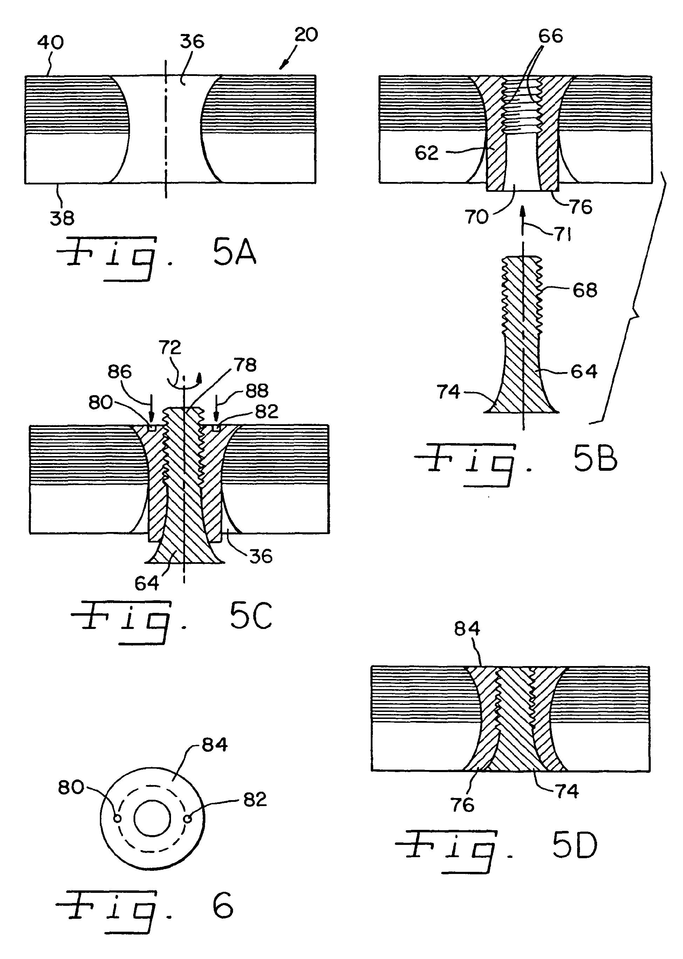

Figs. 5a-5d illustrate an embodiment of the method of the present invention for fastening a composite laminate 20 together. In contrast with the fastener assembly shown in Fig. 4 wherein expanding rod 50 is pulled axially through blind fastener 42 to radially expand blind fastener 42, the embodiment in Fig. 5 includes a blind fastener 62 and an expanding rod 64 which include internal threads 66 and external threads 68, respectively. The internally threaded blind fastener 62 is placed into the complex shaped hole 36 in composite laminate 20 (Fig. 5b). Expanding rod 64 is then inserted into through channel 70 of blind fastener 62, as indicated by arrow 71, and threadingly engaged with blind fastener 62. Rotational movement, indicated by arrow 72, of expanding rod 64 in turn causes relative axial movement between blind fastener 62 and expanding rod 64 in the direction of arrow 71 (Fig. 5c). Blind fastener 62 is selected with a material type and configuration (e.g., wall thickness) which allows deformation of blind fastener 62 as shown.

Of course, it will be appreciated that the expanding rod may first be threadingly engaged with the blind fastener, and thereafter installed as an assembly in the hole in the composite laminate. Preassembly of the expanding rod and blind fastener allows the assembly to be inserted and attached from one side of the composite laminate.

A flared end 74 on expanding rod 64 causes end 76 of blind fastener 62 to radially expand and fill the complex shaped hole 36 (Fig. 5d). An end 78 of expanding rod 64 is then machined off flush so that the fastener assembly is substantially coplanar with opposite sides 38 and 40 of composite laminate 20.

Blind fastener 62 may be held stationary so that expanding rod 64 can be threaded therein to radially expand blind fastener 62. For example, blind fastener 62 may be provided with two recesses 80 and 82 (Fig. 6) in an axial surface 84 thereof which allow corresponding projections (not shown) to be placed therein, as indicated by arrows 86 and 88, to prevent blind fastener 62 from rotating during assembly.

Alternatively, the expanding rod may be configured in any suitable manner (such as with a specific projection or recess) allowing the expanding rod to be rotatably driven into the blind fastener. For certain applications, it may also be possible to rotatably drive the blind fastener while holding the expanding rod in a stationary position. It will be appreciated that the extent to which blind fastener 62 and expanding rod 64 in Fig. 5 are threaded, and the particular pitch of the threads, may vary depending upon the specific application.

The fastener assembly of the present invention has been illustrated herein in conjunction with throughholes having particular complex shaped geometries. However, it is to be understood that the fastening assembly of the present invention can also be used with hole geometries other than the ones shown herein. Moreover, the fastener assembly of the present invention has been illustrated herein in conjunction with throughholes in composite laminates. However, the fastener assembly of the present invention can also be used with throughholes in metal laminates.

While this invention has been described as having a preferred design, the present invention can be further modified within the scope of the appended claims.

## Claims

1. A blind fastener assembly for insertion into a throughhole (36) of a multi-layered laminate (20) to thereby fasten the laminate together, the throughhole (36) having an inner surface and a length extending from a first outer surface (38) of the laminate (20) to a second outer surface (40) of the laminate, the throughhole having a first width at the first outer surface (38), a second width at the second outer surface (40), and a third width at a point along the length of the throughhole (36) between the first outer surface (38) and the second outer surface (40), the third width being less than each of the first width and the second width, said fastener assembly in a preassembled state comprising:
a substantially annular fastener member (62) having an axial through channel (70) with internal threads (66); a first axial end (76) with a first end width and with a first wall thickness and a second axial end with a second end width and with a second wall thickness, said second end width being larger than said first end width and larger than said third width of said throughhole (36), said second wall thickness being larger than the first wall thickness; and
an elongate expanding element (64) having a first axial end with a first width and a second axial end (78) with a second width, said first width being larger than the second width, said expanding element (64) having external threads (68) engaging with the internal threads (66) of the fastening member (62) and having an overall length longer than said fastener member (62) thereby having its second axial end (78) extending beyond the second axial end of the fastener element (62); said preassembled fastener assembly (62, 64) being configured to be inserted as a unit into the throughhole (36) of the laminate (20) from said second outer surface (40) thereof leaving the second axial end (78) of the expander element (64) accessible for relative rotation of the expanding element (64) and the fastener member (62) at the second outer surface (40) such that said first end of the expanding element (64) expands the first end of the fastener member (62) so as to bring an outer peripheral surface of the fastener member (62) to conform to the inner surface of the throughhole (36), and to bring the first ends of the fastener member (62) and the expanding element (64) to be substantially flush with the first outer surface (38) of the laminate (20) and bringing the second ends of the fastener member (62) and the expander element (64) substantially flush with the second outer surface (40) by machining off the second axial end (78) of the expanding element (64) extending beyond the second axial end of the fastener member (62)..

2. The fastener assembly of claim 1, wherein said second axial surface of said fastener member (62) has at least one recess (80, 82) configured for receiving a manufacturing tool for holding said fastener member (62) stationary while said expanding element (64) is being screwed into said fastener member (62).

3. The fastener assembly of claim 1 or 2, wherein the inner surface of the throughhole (36) has a convex shapes

## Patentansprüche

1. Blindfixiervorrichtung zum Einführen in ein Durchgangsloch (36) eines mehrschichtigen Laminats (20), um **dadurch** die Laminate aneinander zu befestigen, das Durchgangsloch (36) weist eine innere Oberfläche und eine sich von einer ersten äußeren Oberfläche (38) des Laminats (20) hin zu einer zweiten äußeren Oberfläche (40) des Laminats erstreckende Länge auf, das Durchgangsloch weist eine erste Breite an der ersten äußeren Oberfläche (38), eine zweite Breite an der zweiten äußeren Oberfläche (40), und eine dritte Breite an einem Punkt entlang der Länge des Durchgangslochs (36) zwischen der ersten äußeren Oberfläche (38) und der zweiten äußeren Oberfläche (40) auf, wobei die dritte Breite geringer als sowohl die erste Breite und die zweite Breite ist, die Fixiermittelvorrichtung umfasst in einem vormontierten Zustand:
ein im Wesentlichen ringförmiges Befestigungselement (62) mit einem axialen Durchgangskanal (70) mit Innengewinde (66); ein erstes axiales Ende (76) mit einer ersten Endbreite und mit einer ersten Wandstärke und einem zweiten axialen Ende mit einer zweiten Endbreite und mit einer zweiten Wandstärke, wobei die zweite Endbreite größer als die erste Endbreite und größer als die dritte Breite des Durchgangslochs (36) ist und die zweite Wandstärke größer als die erste Wandstärke ist; und
ein verlängertes Aufweitungselement (64) mit einem ersten axialen Ende mit einer ersten Breite und einem zweiten axialen Ende (78) mit einer zweiten Breite, die erste Breite ist größer als die zweite Breite, das Aufweitungselement (64) hat ein Außengewinde (68) das mit dem Innengewinde (66) des Befestigungselements (62) in Eingriff steht und eine längere Gesamtlänge als das Befestigungselement (62) aufweist, wodurch das zweite axiale Ende (78) sich über das zweite axiale Ende des Befestigungselements (62) hinaus erstreck; die vormontierte Fixiervorrichtung (62, 64) ist dazu ausgebildet, um von der zweiten äußeren Oberfläche (40) des Laminats (20) als eine Einheit in das Durchgangsloch (36) des Laminats (20) eingeführt zu werden, um **dadurch** das zweite axiale Ende (78) des Aufweitungselements (64) zugänglich für die relative Drehung des Aufweitungselements (64) und des Befestigungselements (62) an der zweiten äußeren Oberfläche (40) zu hinterlassen, so dass das erste Ende des Aufweitungselements (64) das erste Ende des Befestigungselements (62) aufweitet, um eine äußere Umfangsoberfläche des Befestigungselements (62) dazu zu bringen sich an die innere Oberfläche des Durchgangslochs (36) anzupassen, und um die ersten Enden des Befestigungselements (62) und des Aufweitungselements (64) im Wesentlichen dazu zu bringen mit der ersten äußeren Oberfläche (38) des Laminats (20) bündig zu sein und durch Abspanen des zweiten axialen Endes (78) des sich über das zweite Ende des Befestigungselements (62) erstreckenden Aufweitungselements (64) zu erwirken, dass die zweiten Enden des Befestigungselements (62) und des Aufweitungselements (64) mit der zweiten äußeren Oberfläche (40) im Wesentlichen fluchten.

2. Fixiervorrichtung nach Anspruch 1, bei der die zweite axiale Oberfläche des Befestigungselements (62) zumindest eine Vertiefung (82, 84) aufweist, wobei die Vertiefung zum Aufnehmen eines Herstellungswerkzeuges zum stationären Halten des Befestigungsmittels (62) während das Aufweitungselement (64) in das Befestigungselement (62) eingeschraubt wird, ausgebildet ist.

3. Fixiervorrichtung nach Anspruch 1 oder 2, bei der die innere Oberfläche des Durchgangslochs (36) eine konvexe Form hat.

## Revendications

1. Ensemble de fixation serti pour l'insertion dans un trou traversant (36) d'un laminé multicouche (20) pour fixer ainsi le laminé ensemble, le trou traversant (36) ayant une surface intérieure et une longueur s'étendant d'une première surface extérieure (38) du laminé (20) à une deuxième surface extérieure (40) du laminé, le trou traversant ayant une première largeur au niveau de la première surface extérieure (38), une deuxième largeur au niveau de la deuxième surface extérieure (40), et une troisième largeur à un point le long de la longueur du trou traversant (36) entre la première surface extérieure (38) et la deuxième surface extérieure (40), la troisième largeur étant inférieure à chacune des première et deuxième largeurs, ledit ensemble de fixation dans un état pré-assemblé comprenant :
un élément de fixation sensiblement annulaire (62) ayant un canal traversant axial (70) avec des filetages internes (66) ; une première extrémité axiale (76) avec une première largeur d'extrémité et avec une première épaisseur de paroi et une deuxième extrémité axiale avec une deuxième largeur d'extrémité et avec une deuxième épaisseur de paroi, ladite deuxième largeur d'extrémité étant plus importante que ladite première largeur d'extrémité et plus importante que ladite troisième largeur dudit trou traversant (36), ladite deuxième épaisseur de paroi étant plus importante que la première épaisseur de paroi ; et
un élément d'expansion allongé (64) ayant une première extrémité axiale avec une première largeur et une deuxième extrémité axiale (78) avec une deuxième largeur, ladite première largeur étant plus importante que la deuxième largeur, ledit élément d'expansion (64) ayant des filetages externes (68) en prise avec les filetages internes (66) de l'élément de fixation (62) et ayant une longueur totale plus longue que ledit élément de fixation (62) ayant ainsi sa deuxième extrémité axiale (78) s'étendant au-delà de la deuxième extrémité axiale de l'élément de fixation (62) ; ledit ensemble de fixation pré-assemblé (62, 64) étant configuré pour être inséré sous forme d'une unité dans le trou traversant (36) du laminé (20) à partir de ladite deuxième surface extérieure (40) de celui-ci laissant la deuxième extrémité axiale (78) de l'élément d'expansion (64) accessible pour une rotation relative de l'élément d'expansion (64) et l'élément de fixation (62) à la deuxième surface extérieure (40) de sorte que ladite première extrémité de l'élément d'expansion (64) s'étende à la première extrémité de l'élément de fixation (62) afin d'amener une surface périphérique extérieure de l'élément de fixation (62) a épouser la surface intérieure du trou traversant (36), et amener les premières extrémités de l'élément de fixation (62) et l'élément d'expansion (64) sensiblement à niveau avec la première surface extérieure (38) du laminé (20) et amener les deuxièmes extrémités de l'élément de fixation (62) et l'élément d'expansion (64) sensiblement à niveau avec la deuxième surface extérieure (40) en usinant la deuxième extrémité axiale (78) de l'élément d'expansion (64) s'étendant au-delà de la deuxième extrémité axiale de l'élément de fixation (62).

2. Ensemble de fixation selon la revendication 1, dans lequel ladite deuxième surface axiale dudit élément de fixation (62) possède au moins un évidement (80, 82) configuré pour recevoir un outil de fabrication pour maintenir ledit élément de fixation (62) stationnaire pendant que ledit élément d'expansion (64) est vissé dans ledit élément de fixation (62).

3. Ensemble de fixation selon la revendication 1 ou 2, dans lequel la surface intérieure du trou traversant (36) a une forme convexe.
